# EUROPÄISCHE PATENTSCHRIFT

(11) **EP 1 132 267 B1**
(45) Veröffentlichungstag und Bekanntmachung des Hinweises auf die Patenterteilung: **27.07.2005**
(21) Anmeldenummer: 01104303.1
(22) Anmeldetag: 22.02.2001
(51) Int. Cl.: B60S 1/38, B60S 1/40

(54) **Wischerblatt für eine Scheibenwischeranlage**
Wiper blade for a windscreen wiper system
Balai d'essuyage pour dispositif d'essuie-glace

(30) Priorität: 10.03.2000 DE 10011841
(43) Veröffentlichungstag der Anmeldung: 12.09.2001
(73) Patentinhaber: Volkswagen Aktiengesellschaft, 38436 Wolfsburg (DE)
(72) Erfinder: Ostrowski, Wolfgang, 38446 Wolfsburg (DE)
(74) Vertreter: Rabe, Andreas

(56) Entgegenhaltungen:
- DE-A- 2 613 439
- DE-U- 29 611 722
- DE-U- 29 712 293
- FR-A- 2 185 524
- FR-A- 2 222 853
- FR-A- 2 427 930
- FR-A- 2 755 927
- GB-A- 702 899
- GB-A- 1 020 322
- US-A- 2 966 692
- US-A- 3 116 510
- US-A- 4 063 328

## Beschreibung

Die Erfindung betrifft ein Wischerblatt zur direkten Anordnung am Wischerarm einer Scheibenwischeranlage, insbesondere für ein Fahrzeug.

Die Anordnung eines Wischerblattes am Wischerarm einer Scheibenwischeranlage erfolgt über eine Anschlußvorrichtung, direkt oder über ein aufwendiges Bügelsystem, wobei die direkte Anordnung den Vorteil einer kleineren Bauhöhe mit sich bringt. Lösungen mit einer solchen direkten Anordnung sind in der DOS 23 24 702 und der DE 197 39 256 A1 beschrieben. Ein Wischerblatt für eine solche Anordnung weist in der Regel einen gekrümmten Träger und eine Wischerleiste mit einer Wischlippe auf, die infolge eines durch den Wischerarm auf das Wischerblatt aufgebrachten Anpreßdruckes an der jeweiligen Scheibe des Fahrzeugs elastisch anliegt.

Bei der in der DE 197 39 256 A1 beschriebenen Lösung ist das Wischerblatt aus einem mehrteiligen, langgestreckten und federstahlelastischen Trägerelement aus zwei gegenüber der Fahrzeugscheibe konkav gekrümmten Federschienen und einer langgestreckten gummielastischen Wischerleiste mit Längsnuten für die Federschienen gebildet, wobei diese an ihren Endabschnitten mit krallenartigen Halteelementen zusammengehalten sind und die Wischerleiste zwischen sich halten. Die Federschienen sind in ihrem mittleren Bereich verbreitert, um die Anordnung einer Anschlußvorrichtung mit einem Gelenkbolzen zu ermöglichen, die mit paarweise angeordneten Schenkeln die Federschienen in diesem Bereich über- oder untergreifen. Dabei ist die Anschlußvorrichtung sowohl Mittel zur gelenkigen Verbindung des Wischerblattes mit dem Wischerarm als auch Halterungsmittel für die beiden Federschienen. Die Krümmung der Federschienen ist stärker als die maximale Krümmung der Fahrzeugscheibe, und das Wischerblatt wird in deren Richtung durch den Wischerarm mit einer Anpreßkraft beaufschlagt, so daß die Wischlippe an allen Bereichen der Fahrzeugscheibe im Schwenkbereich des Wischerarmes anliegt.

Das Wischerblatt nach der DOS 23 24 702 ist aus nur zwei Teilen gebildet, aus einer einstückigen Wischerblatthalterung und einer in dieser festgelegten Wischerleiste, wobei die Wischerblatthalterung als ein zur Wischerleiste und zur Fahrzeugscheibe hin konkav gewölbter und im Querschnitt für an der Wischerleiste angeformte Rastansätze ausgebildet ist. Die Wischerleiste ist im Querschnitt an den Kunststoff-Bügel angepaßt. An diesen sind in dessen mittlerem Bereich Seitenflansche und ein Lagerbolzen zur Anordnung einer Anschlußvorrichtung für den Wischerarm einstückig angeformt. Der Kunststoff-Bügel ist elastisch und führt die Wischerleiste über die gesamte Länge federnd. Da die Wischlippe scheibenseitig über einen außerhalb des Kunststoff-Bügel-Querschnitts befindlichen, an der Wischerleiste ausgebildeten Kippsteg mit dem im Bügel angeordneten Halterungsteil der Wischerleiste verbunden und quer zur Bewegungsrichtung des Wischerblattes kippbar sein muß, weist dieses Wischerblatt ein große Bauhöhe auf.

Die DE 197 38 232 A1 hat ein aus einem elastischen Kunststoff bestehendes Trägerelement für eine gummielastische, bandartig langgestreckte Wischerleiste zum Gegenstand. Die Wischerleiste ist längsachsenparallel an dem Trägerelement befestigbar, wobei die Verbindung durch Haltekrallen oder als Klebeverbindung herstellbar ist. Es ist auch bekannt, die zur Verbindung des Wischerblattes mit dem Wischerarm erforderliche Anschlußvorrichtung als separates Bauteil auszubilden und mittels eines Klebers (DE 297 08 293 U1) oder mittels einer Schweißverbindung (DE 197 18 490 A1) am Trägerelement zu befestigen.

Die vorstehend beschriebenen Wischerblätter müssen bei einem Verschleiß der Wischerleiste komplett ausgetauscht werden, obwohl das Trägerelement noch voll funktionsfähig ist.

Ein Wischerblatt nach dem Oberbegriff des Anspruchs 1 ist in der US 4,063,328 beschrieben.

Es ist Aufgabe der Erfindung, ein Wischerblatt nach dem Oberbegriff des Anspruchs 1 so weiterzubilden, daß die Wischerleiste und der Wischerarm auf einfache Weise lösbar am Trägerelement befestigt werden können.

Diese Aufgabe wird bei einem Wischerblatt nach dem Oberbegriff des Anspruchs 1 durch dessen kennzeichnende Merkmale gelöst. Vorteilhafte Ausgestaltungen sind in den Unteransprüchen aufgeführt.

Die Erfindung besteht darin, daß das aus einem Trägerelement und einer an diesem angeordneten gummielastischen Wischerleiste gebildete Wischerblatt als Trägerelement eine zur Wischlippe der Wischerleiste konkav gekrümmte einstückige Trägerschiene, die vorteilhafterweise aus einem federelastischen Material ist, aufweist, die mit einem entlang ihrer Längsachse ausgebildeten, an seinen beiden Enden geschlossenen und im Bereich eines Endes eine Erweiterung aufweisenden Aufnahmeschlitz zur lösbaren Anordnung der Wischerleiste versehen ist. Der Aufnahmeschlitz ist an die Länge der Wischerleiste angepaßt. Die Erweiterung dient der Einführung und der Demontage der Wischerleiste.

Gemäß der Erfindung weist die Trägerschiene in ihrem mittleren Bereich eine sickenartige Auswöllbung auf. Vorteilhafterweise kann die Auswölbung quer zur Längsachse nach außen vorstehende Gelenkzapfen oder Aufnahmen für Gelenkzapfen zur Verbindung mit dem Wischerarm angeordnet haben. Die Auswölbung dient dabei der Ausbildung eines Tunnels zum unbehinderten Durchführen der Wischerleiste bis zum Ende des Aufnahmeschlitzes und der Anordnung von quer zur Längsachse nach außen vorstehenden Gelenkzapfen oder Aufnahmen für Gelenkzapfen zur Verbindung mit dem Wischerarm. Die Wischerleiste wird zu ihrer Montage durch die Erweiterung des Aufnahmeschlitzes im Bereich eines seiner Enden in diesen ein- und durch den Tunnel bis zum anderen Ende geschoben und ist damit auf einfache Weise mit der Trägerschiene verbunden. Sie kann auf ebenso einfache Weise demontiert werden, indem sie durch die Erweiterung von der Trägerschiene abgezogen wird. Eine beschädigte oder verschlissene Wischerleiste kann somit auf einfache Weise ausgetauscht werden. Damit ergibt sich eine kostengünstigere Lösung gegenüber den Lösungen des Standes der Technik, bei denen bei einer verschlissenen Wischerleiste das gesamte Wischerblatt erneuert werden muß.

In einer bevorzugten Ausführungsform ist die Auswölbung quer zur Längsachse der Trägerschiene ausgebildet und weist in ihrem mittleren Bereich einen ebenen Abschnitt zur Anordnung eines Bolzens auf, der beidseits nach außen vorsteht und die Gelenkzapfen bildet. Dieser Bolzen wird bevorzugt aufgeschweißt. Die Auswölbung kann auch längs der Längsachse ausgebildet sein, was jedoch aus technologischen Gründen auch eine Umformung der beiden Endbereiche der Trägerschiene mit sich bringt.

Bei am Wischerarm ausgebildeten Gelenkzapfen sind am Wischerblatt Aufnahmen für diese vorzusehen. Die Aufnahmen können vorteilhaft einstückig an der Trägerschiene angeformt sein, wozu ein entsprechender Stanzschnitt in Verbindung mit einem nachfolgenden Umformprozeß dient, wenn die Trägerschiene aus einem federelastischen metallischen Werkstoff gefertigt ist. Beim Einsatz eines hochfesten elastischen Kunststoffmaterials kann die Trägerschiene in einem einzigen Arbeitsschritt hergestellt werden, insbesondere durch Spritzgießen.

Die Wischerleiste weist in bekannter Weise auf ihrer der Wischlippe abgewandten Seite gegenüberliegend ausgebildete Längsnuten und ein parallel zu diesen ausgebildetes Kopfteil zur Anordnung am Aufnahmeschlitz auf. Mit ihren Längsnuten wird die Wischerleiste mit den den Aufnahmeschlitz in Längsrichtung begrenzenden und als Führungsschienen dienenden Rändern der Trägerschiene in Eingriff gebracht, indem sie im Bereich der Erweiterung des Aufnahmeschlitzes in diesen eingeschoben wird. Um die Wischerleiste bis zum der Erweiterung abgewandten Ende des Aufnahmeschlitzes in diesen unbehindert einschieben zu können, weisen der Tunnel und die Tunnelöffnungen eine an den Querschnitt des Kopfteils angepaßte Form auf und sind mit einer entsprechenden lichten Höhe und Weite ausgestattet.

Die Erweiterung des Aufnahmeschlitzes kann vorteilhaft im Abstand vom betreffenden Ende des Aufnahmeschlitzes angeordnet und dabei wenigstens so breit sein, daß das Kopfteil der Wischerleiste unbehindert durch die Erweiterung in den Aufnahmeschlitz eingeführt werden kann. Die Anordnung der Erweiterung im Abstand vom Ende dient einer Fixierung der Wischerleiste an diesem Ende. Die gummielastische Wischerleiste wird bei ihrer Montage an der Trägerschiene unter einer elastischen Komprimierung zunächst vollständig in den Aufnahmeschlitz eingeschoben und mit ihrem rückseitigen Ende dann ebenfalls in den verengten erweiterungsseitigen Endbereich des Aufnahmeschlitzes eingeführt, in dem sie sich bis zur Anlage an der Stirnseite des Aufnahmeschlitzes entspannen kann. Zur Optimierung der Fixierung der Wischerleiste an der Trägerschiene ist die Wischerleiste etwas länger als der Aufnahmeschlitz, so daß diese in einem leicht gespannten Zustand zwischen den Enden des Aufnahmeschlitzes angeordnet ist.

Die Erfindung wird nachstehend anhand zweier Ausführungsbeispiele erläutert. In den zugehörigen Zeichnungen zeigen schematisch:
Fig. 1: eine Trägerschiene für ein Wischerblatt,
Fig. 2: ein komplettes Wischerblatt,
Fig. 3: den Querschnitt der Wischerleiste des Wischerblattes,
Fig. 4: einen Stanzschnitt einer Trägerschiene und
Fig. 5: eine aus diesem geformte Trägerschiene.

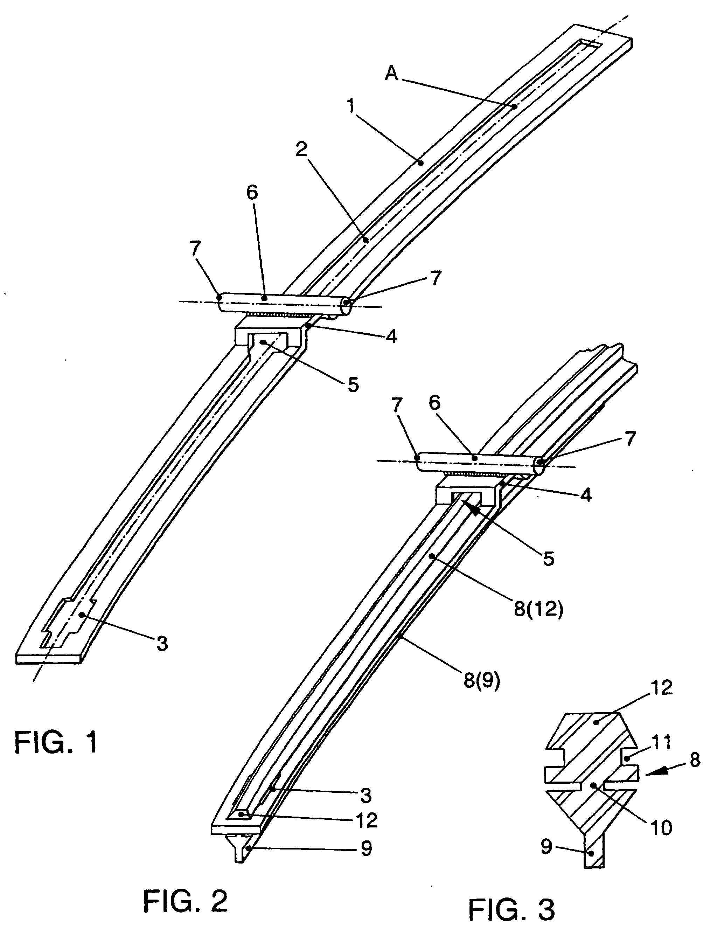

In Fig. 1 ist eine Trägerschiene 1 als Bestandteil eines Wischerblattes zur direkten Anordnung am Wischerarm einer Scheibenwischeranlage dargestellt. Sie ist aus einem federelastischen Stahlblech gefertigt und weist einen langgestreckten Aufnahmeschlitz 2 auf, der an seinen beiden Enden geschlossen ist. Im Bereich des einen Endes dieses Aufnahmeschlitzes 2 ist eine Erweiterung 3 in rechteckiger Form ausgebildet und im mittleren Bereich der Trägerschiene 1, bezogen auf deren Längsachse A, eine sickenartige Auswölbung 4 quer zur Längsachse A, die mit einem Tunnel 5 für das Kopfteil einer an der Trägerschiene 1 anzuordnenden Wischerleiste versehen ist. Die Tunnelöffnungen haben einen rechteckigen Querschnitt. Die Auswölbung 4 ist in ihrem mittleren Bereich außenseitig eben und trägt auf ihrer der anzuordnenden Wischerleiste abgewandten Seite einen quer zur Längsachse A ausgerichteten Bolzen 6, der an der Auswölbung 4 angeschweißt ist und beidseits der Trägerschiene 1 nach außen vorsteht und zwei Gelenkzapfen 7 zur gelenkigen Verbindung mit dem Wischerarm bildet. Fig. 2 zeigt das aus der Trägerschiene 1 und einer Wischerleiste 8 gebildete Wischerblatt 9. Der Querschnitt der Wischerleiste 8 ist in Fig. 3 zu sehen.

Diese Wischerleiste 8 weist eine Wischlippe 9, einen Kippsteg 10, zwei Längsnuten 11 und ein Kopfteil 12 auf und ist aus einem gummielastischen Material gefertigt. Im noch unmontierten Zustand ist die Wischerleiste 9 etwas länger als der Aufnahmeschlitz 2, so daß sie im leicht komprimierten und somit gespannten Zustand im Aufnahmeschlitz 2 angeordnet ist. Dabei befinden sich ihre Längsnuten 11 mit den den Aufnahmeschlitz 2 begrenzenden Rändern der Trägerschiene 1 im Eingriff.

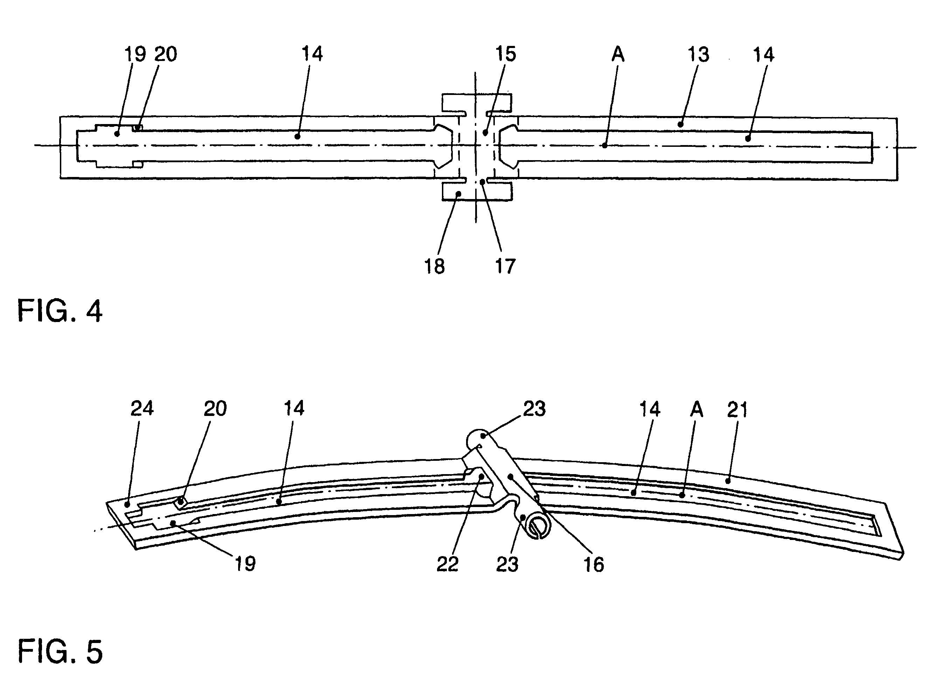

Fig. 4 zeigt den Stanzschnitt (Stanzteil) 13 für eine abweichend ausgeführte Trägerschiene. Im mittleren Bereich des Stanzteils 13 ist eine einen Aufnahmeschlitz 14 unterbrechende Brücke 15 zur Ausbildung einer sickenartigen Auswölbung (16, Fig. 5) angeordnet, an der auf beiden Seiten des Stanzteils 13, jeweils über einen Steg 17 mit diesem verbunden, ein rechteckförmiger Abschnitt 18 zur Ausbildung einer Lagerbuchse für einen am Wischerarm angeordneten Lagerzapfen angeformt ist. Beidseits der Brücke 15 in Längsrichtung des Stanzteils 13 ist jeweils ein trapezförmiger, der Querschnittsform des Kopfteils 12 der Wischerleiste 8 entsprechender Ausschnitt ausgebildet, der jeweils in eine Hälfte des Aufnahmeschlitzes 14 mündet. An dem linksseitigen Ende des Aufnahmeschlitzes 14 in Fig. 4 ist eine rechteckförmige Erweiterung 19 ausgestanzt, die mit Einführschrägen 20 versehen ist. Dieses Stanzteil wird durch einen Umformprozeß zu einer Trägerschiene 21 verformt, indem es über seine Länge gekrümmt und im Bereich der Brücke 15 zu einer sickenartigen Auswölbung 16 mit einem Tunnel 22 trapezförmig ausgeformt wird und die beiden Abschnitte 18 zu einer Lagerbuchse 23 gebogen werden. Diese Trägerschiene 21 ist in Fig. 5 gezeigt. Die beiden trapezförmigen Ausschnitte am Aufnahmeschlitz 14 bilden die Tunnelöffnungen für die Wischerleiste 8.

Die Wischerleiste 8 wird an der Trägerschiene 1 oder 21 montiert, indem sie mit einem Ende von der Unterseite der jeweiligen Trägerschine 1 oder 21 her in die Erweiterung 3 bzw. 19 gesteckt, dort mit ihren Längsnuten 11 in Eingriff mit den Rändern des Aufnahmeschlitzes 3 bzw. 14 gebracht und anschließend mit ihren eingeführten frontseitigen Ende in die Trägerschiene 1 bzw. 21 bis zum Anschlag eingeschoben und soweit komprimiert wird, daß ihr rückseitiges Ende in die Erweiterung 3 oder 19 gelangt. Anschließend wird sie in Eingriff mit den Endbereichen 24 der den jeweiligen Aufnahmeschlitz 3 bzw. 14 begrenzenden Rändern gebracht und im wesentlichen entspannt. Eine Demontage erfolgt in umgekehrter Weise.

### BEZUGSZEICHENLISTE

- 1: Trägerschiene
- 2: Aufnahmeschlitz
- 3: Erweiterung
- 4: Auswölbung
- 5: Tunnel
- 6: Bolzen
- 7: Gelenkzapfen
- 8: Wischerleiste
- 9: Wischlippe
- 10: Kippsteg
- 11: Längsnut
- 12: Kopfteil
- 13: Stanzschnitt/ Stanzteil
- 14: Aufnahmeschlitz
- 15: Brücke
- 16: Auswölbung
- 17: Steg
- 18: Abschnitt
- 19: Erweiterung
- 20: Einführschräge
- 21: Trägerschiene
- 22: Tunnel
- 23: Lagerbuchse
- 24: Endbereich
- A: Achse

## Patentansprüche

1. Wischerblatt zur direkten Anordnung am Wischerarm einer Scheibenwischeranlage, mit einem langgestreckten Trägerelement und einer an diesem angeordneten gummielastischen Wischerleiste mit einer Wischlippe zur Anlage an der Scheibe, wobei das Trägerelement eine zur Wischlippe konkav gekrümmte Trägerschiene (1; 21) ist, die mit einem langgestreckten, an seinen beiden Enden geschlossenen und im Bereich eines Endes eine Erweiterung (3; 19) aufweisenden Aufnahmeschlitz (2; 14) zur lösbaren Anordnung der Wischerleiste (8) versehen ist, **dadurch gekennzeichnet, daß** die Trägerschiene (1; 21) zur Verbindung mit dem Wischerarm in ihrem mittleren Bereich eine sickenartige Auswölbung (4; 16) aufweist, in der ein Tunnel (5; 22) für die Wischerleiste (8) ausgebildet ist.

2. Wischerblatt nach Anspruch 1, **dadurch gekennzeichnet, daß** an der Auswölbung (4; 16) quer zur Längsachse (A) nach außen vorstehende Gelenkzapfen (7) oder Aufnahmen (23) für Gelenkzapfen zur Verbindung mit dem Wischerarm angeordnet sind.

3. Wischerblatt nach Anspruch 1 oder 2, **dadurch gekennzeichnet, daß** die Auswölbung (4; 16) quer zur Längsachse (A) der Trägerschiene (1; 21) ausgebildet ist.

4. Wischerblatt nach einem oder mehreren der Ansprüche 1 bis 3, **dadurch gekennzeichnet, daß** die Auswölbung (4; 16) in ihrem mittleren Bereich einen ebenen Abschnitt aufweist.

5. Wischerblatt nach Anspruch 2, **dadurch gekennzeichnet, daß** die Gelenkzapfen (7) an einem Bolzen (6) ausgebildet sind, der auf der der Wischerleiste (8) abgewandten Seite der Auswölbung (4) fest angeordnet ist.

6. Wischerblatt nach Anspruch 2, **dadurch gekennzeichnet, daß** die Aufnahmen (23) für die Gelenkzapfen einstückig an der Trägerschiene angeformt sind.

7. Wischerblatt nach einem oder mehreren der vorstehenden Ansprüche, **dadurch gekennzeichnet, daß** die Wischerleiste (8) auf ihrer der Wischlippe (9) abgewandten Seite gegenüberliegend ausgebildete Längsnuten (11) und ein parallel zu diesen ausgebildetes Kopfteil (12) zur Anordnung am Aufnahmeschlitz (2; 14) aufweist.

8. Wischerblatt nach einem oder mehreren der vorstehenden Ansprüche, **dadurch gekennzeichnet, daß** die beiden Tunnelöffnungen (5;22) an die Form des Kopfteils (12) der Wischerleiste (8) angepaßt sind und in einer Ebene quer zur Trägerschiene (21) mindestens auch deren Querschnittsgröße aufweisen.

9. Wischerblatt nach einem oder mehreren der vorstehenden Ansprüche, **dadurch gekennzeichnet, daß** die Erweiterung (3; 19) des Aufnahmeschlitzes (2; 14) im Abstand vom Ende desselben ausgebildet ist.

10. Wischerblatt nach einem oder mehreren der vorhergehenden Ansprüche, **dadurch gekennzeichnet, daß** die Wischerleiste (8) im unmontierten Zustand länger als der Aufnahmeschlitz (2; 14) ist.

11. Wischerleiste nach Anspruch 1, 2, oder 6, **dadurch gekennzeichnet, daß** die Trägerschiene (1; 21) ein Stanzteil ist, an dem die Auswölbung (4; 16) durch einen Umformprozeß eingebracht ist.

## Claims

1. Wiper blade for the direct arrangement on the wiper arm of a windscreen wiper system, having an elongate support element and a rubber-elastic wiper strip, which is arranged thereon and has a wiping lip for bearing against the windscreen, the support element being a support rail (1; 21) which is curved concavely to the wiping lip and is provided with an elongate receiving slot (2; 14), which is closed at both of its ends and has a widened portion (3; 19) in the region of one end and is intended for the releasable arrangement of the wiper strip (8), **characterized in that** the support rail (1; 21) has in its central region for connection to the wiper arm a bead-like curvature (4; 16) in which a tunnel (5; 22) for the wiper strip (8) is formed.

2. Wiper blade according to Claim 1, **characterized in that** pivots (7) protruding outwards transversely with respect to the longitudinal axis (A) or receptacles (23) for pivots for connection to the wiper arm are arranged on the curvature (4; 16).

3. Wiper blade according to Claim 1 or 2, **characterized in that** the curvature (4; 16) is formed transversely with respect to the longitudinal axis (A) of the support rail (1; 21).

4. Wiper blade according to one or more of Claims 1 to 3, **characterized in that** the curvature (4; 16) has a planar section in its central region.

5. Wiper blade according to Claim 2, **characterized in that** the pivots (7) are formed on a pin (6) which is arranged fixed on that side of the curvature (4) which faces away from the wiper strip (8).

6. Wiper blade according to Claim 2, **characterized in that** the receptacles (23) for the pivots are integrally formed on the support rail.

7. Wiper blade according to one or more of the preceding claims, **characterized in that** the wiper strip (8) has, on its side facing away from the wiper lip (9), longitudinal grooves (11) which are designed in a manner such that they lie opposite each other and a head part (12), which is designed parallel to the said longitudinal grooves, for arrangement at the receiving slot (2; 14).

8. Wiper blade according to one or more of the preceding claims, **characterized in that** the two tunnel openings (5; 22) are matched to the shape of the head part (12) of the wiper strip (8) and at least also have the cross-sectional size thereof in a plane transverse to the support rail (21).

9. Wiper blade according to one or more of the preceding claims, **characterized in that** the widened portion (3; 19) of the receiving slot (2; 14) is formed at a distance from the end thereof.

10. Wiper blade according to one or more of the preceding claims, **characterized in that** the wiper strip (8), in the unfitted state, is longer than the receiving slot (2; 14).

11. Wiper strip according to Claims 1, 2 or 6, **characterized in that** the support rail (1; 21) is a punched part on which the curvature (4; 16) is made by a forming process.

## Revendications

1. Balai d'essuie-glace à monter directement sur le bras d'essuie-glace d'un dispositif d'essuie-glace, avec un élément de support allongé et une raclette d'essuie-glace en caoutchouc élastique disposée sur celui-ci et comportant une lèvre d'essuyage à appliquer sur la vitre, dans lequel l'élément de support est une latte de support (1; 21) à courbure concave vers la lèvre d'essuyage, qui est pourvue d'une fente de montage (2; 14) allongée, fermée à ses deux extrémités et présentant un élargissement (3; 19) dans la région d'une extrémité en vue du montage amovible de la raclette d'essuie-glace (8), **caractérisé en ce que** la latte de support (1; 21) présente dans sa région centrale, en vue de son assemblage avec le bras d'essuie-glace, un renflement en forme de moulure (4; 16) dans lequel est formé un tunnel (5; 22) pour la raclette d'essuie-glace (8).

2. Balai d'essuie-glace selon la revendication 1, **caractérisé en ce que** des tourillons d'articulation (7) ou des logements (23) pour des tourillons d'articulation saillants vers l'extérieur sont disposés sur le renflement (4; 16) transversalement à l'axe longitudinal (A), en vue de l'assemblage avec le bras d'essuie-glace.

3. Balai d'essuie-glace selon la revendication 1 ou 2, **caractérisé en ce que** le renflement (4; 16) est formé transversalement à l'axe longitudinal (A) de la latte de support (1; 21).

4. Balai d'essuie-glace selon une ou plusieurs des revendications 1 à 3, **caractérisé en ce que** le renflement (4; 16) présente une partie plane dans sa région centrale.

5. Balai d'essuie-glace selon la revendication 2, **caractérisé en ce que** les tourillons d'articulation (7) sont formés sur une tige (6), qui est fixée sur la face du renflement (4) orientée à l'opposé de la raclette d'essuie-glace (8).

6. Balai d'essuie-glace selon la revendication 2, **caractérisé en ce que** les logements (23) pour les tourillons d'articulation sont formés d'un seul tenant avec la latte de support.

7. Balai d'essuie-glace selon une ou plusieurs des revendications précédentes, **caractérisé en ce que** la raclette d'essuie-glace (8) présente, sur sa face orientée à l'opposé de la lèvre d'essuyage (9), des rainures longitudinales opposées (11) et une tête (12) formée parallèlement à celles-ci en vue de son placement dans la fente de montage (2; 14).

8. Balai d'essuie-glace selon une ou plusieurs des revendications précédentes, **caractérisé en ce que** les deux ouvertures du tunnel (5; 22) sont adaptées à la forme de la tête (12) de la raclette d'essuie-glace (8) et présentent, dans un plan transversal à la latte de support (21), au moins la grandeur de la section transversale de celle-ci.

9. Balai d'essuie-glace selon une ou plusieurs des revendications précédentes, **caractérisé en ce que** l'élargissement (3; 19) de la fente de montage (2; 14) est formé à distance de l'extrémité de celle-ci.

10. Balai d'essuie-glace selon une ou plusieurs des revendications précédentes, **caractérisé en ce que** la raclette d'essuie-glace (8) à l'état non monté est plus longue que la fente de montage (2; 14).

11. Raclette d'essuie-glace selon la revendication 1, 2 ou 6, **caractérisée en ce que** la latte de support (1; 21) est une pièce estampée, sur laquelle le renflement (4; 16) est réalisé par une opération de déformation.
